(19) **Europäisches Patentamt / European Patent Office / Office européen des brevets**

(11) **EP 4 267 412 B1**

(12) **EUROPEAN PATENT SPECIFICATION**

(45) Date of publication and mention
of the grant of the patent:
**31.07.2024 Bulletin 2024/31**

(21) Application number: **20842329.3**

(22) Date of filing: **22.12.2020**

(51) International Patent Classification (IPC):
**B60C 11/00** *(2006.01)* **B60C 11/13** *(2006.01)*

(52) Cooperative Patent Classification (CPC):
**B60C 11/0041; B60C 11/0008; B60C 11/1346;**
B60C 11/0306; B60C 2011/0016; B60C 2011/0025

(86) International application number:
**PCT/JP2020/047832**

(87) International publication number:
**WO 2022/137317 (30.06.2022 Gazette 2022/26)**

(54) **A TIRE TREAD**

REIFENLAUFFLÄCHE

BANDE DE ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.11.2023 Bulletin 2023/44**

(73) Proprietor: **COMPAGNIE GENERALE DES
ETABLISSEMENTS MICHELIN
63000 Clermont-Ferrand (FR)**

(72) Inventor: **ANDO, Kiyoteru
Tokyo 163-1073 (JP)**

(74) Representative: **M.F.P. Michelin
DCJ/PI - F35 - Ladoux
23 place des Carmes-Déchaux
63040 Clermont-Ferrand Cedex 9 (FR)**

(56) References cited:
EP-A1- 2 379 350     EP-A1- 3 521 063
WO-A1-2018/221630     JP-B2- 6 069 709

**Description**

[Technical Field]

The present invention relates to a tread for a tire, in particular to a tread for a tire for providing improvement of performance on non-wintry surface while maintaining performance on wintry surface.

[Background Art]

In recent years, a tire so-called "all-season" tire which has capability to drive on wintry surface while maintaining high speed driving capability on non-wintry surface is beginning to popularize.

Also to a tire so-called "studless" tire which is suitable for driving on ice covered and/or snow covered wintry surface, there is a desire to increase performance on non-wintry surface that is not covered by ice nor snow while still improving performance on wintry surface

In order to increase performance on both wintry and non-wintry surface, introducing a hard layer onto a side face of a block is effective as the hard layer introduced onto the side face of the block increases efficiently so-called an edge pressure.

WO2013088570 discloses a tread for a pneumatic tire in which a reinforcing layer is provided on a side wall portion of a ground-contacting element of a tread of a tire for improving performance on wintry surface, and in a pneumatic tire having such a tread, the reinforcing layer has a mean thickness of less than 0.5 mm, is provided over an area at least equal to 50% of the side wall portion, and has a material modulus at least equal to 200 MPa

JP1995-047814 discloses a tread for a tire having reinforcing layers using rubber having a JIS A hardness of 80 to 95 degrees on block side walls facing a transverse groove and an auxiliary groove, in a block provided with three narrow incisions and one auxiliary groove for improving performance on wintry surface.

JP2010-105509 discloses a tire provided with a composition in which 50 parts or more by weight of at least one of carbon black and silica is combined with 100 parts by weight of a diene rubber containing 30% or more by weight of a rubber component having a glass transition temperature at least equal to -60°C, and providing reinforcing layers employing rubber having a brittleness temperature at most equal to -30°C on the side walls of the blocks for improving performance on both wintry and non-wintry surfaces.

Attention is also drawn to the disclosure of WO 2018/221630 A1 being relevant for the present invention.

[Citation List]

[Patent Literature]

[PTL 1]
WO2013088570
[PTL 2]
JP1995-047814
[PTL 3]
JP2010-105509

However with the solutions disclosed in these documents, improvement of performance on non-wintry surface, especially wet performance is not satisfactory as a hard/a reinforcing layer providing a good edge effect has temperature dependency, in particular those providing an improvement of performance on wintry surface impacts negatively on wet performance at low surface temperature. Thus there is a desire to provide improvement of performance on non-wintry surface at wide range of temperature while maintaining or even still improving performance on wintry surface.

Therefore, there is a need for a tread for a tire which provides improvement of performance on non-wintry surface at wide range of temperature while maintaining or even still improving performance on wintry surface.

Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

An "incision", also referred to as a "sipe" is a narrow cutout formed toward radially inwardly from a surface of a tread made by, for example a thin blade having a shape like a knife blade. A width of the incision at the surface of the tread is narrower than a groove, for example less than or equal to 2.0mm. this incision may, different from the groove, be partly or completely closed when such the incision is in a contact patch and under usual rolling condition.

A "contact patch" is a footprint of a tire mounted onto its standard rim as identified in tire standards such as ETRTO, JATMA or TRA, and inflated at its nominal pressure and under its nominal load. A "width TW" of a contact face is a maximum contact width of the contact patch along with an axis of rotation of the tire.

A modulus G* is the dynamic shear complex modulus of the material at 60°C. The storage elastic modulus represented by G' and the loss elastic modulus represented by G", which are well known dynamic properties for one skilled in the art, are measured by means of a viscosity analyzer (microanalyzer: Metravib VB4000) using a test piece molded from the raw composition or a test piece which is combined with the composition after vulcanization. The test piece that is used is one that is described in Figure X2.1 (a circular method) of the standard ASTM D 5992-96 (version published September 2006, initially approved in 1996). The diameter 'd' of the test piece is 10 mm (consequently the test piece has a circular cross section of 78.5 mm2), the thickness 'L' of each part of the rubber compound is 2 mm, and the ratio 'd/L' (described in paragraph X2.4 of the ASTM standard, in contrast to the ratio 'd/L' of 2 recommended in the standard ISO 2856) is 5. In the test, the response of a test piece comprising a vulcanized rubber composition subjected to a simple alternating sinusoidal shear load is measured at a frequency of 10 Hz. The maximum shear stress imposed during the test is 0.7 MPa. The test is conducted by varying the temperature from Tmin, which is a temperature lower than the glass transition temperature (Tg) of the rubber material, to a maximum temperature Tmax, in the vicinity of 100°C, at a rate of 1.5°C per minute. The test piece is stabilized for approximately 20 minutes at Tmin prior to the start of the test in order to obtain a satisfactory uniformity of temperature within the test piece. The results obtained are the storage elastic modulus (G') and the loss elastic modulus (G") at the prescribed temperature. The complex modulus G* is defined in terms of the absolute values of the storage elastic modulus and the loss elastic modulus using the following formula:

$$G^* = \sqrt{G'^2 + G''^2}$$

It is thus an object of the invention to provide a tread for a tire which provides improvement of performance on non-wintry surface at wide range of temperature while maintaining or even still improving performance wintry surface.

[Summary of Invention]

The present invention provides a tread for a tire having a contact face intended to come into contact with ground during rolling, the tread being provided with at least one principal groove of a depth Dp, and a plurality of sub grooves of a depth Ds extending in an orientation with an angle relative to an orientation the at least one principal groove being extending, the at least one principal groove and the plurality of sub grooves delimiting a plurality of contact elements, a material constituting the plurality of contact elements having a modulus G* at 60°C Mb and a glass transition temperature Tgb, at least one of a contact element among the plurality of contact elements being provided with a covering layer covering at least one of a lateral face of the contact element facing to circumferential orientation at least partly, the covering layer consists of at least two layers, an outer covering layer facing to outward of the contact element, a material constituting the outer covering layer has a modulus G* at 60°C Mo and a glass transition temperature Tgo, and an inner covering layer facing to inward of the contact element, a material constituting the inner covering layer has a modulus G* at 60°C Mi and a glass transition temperature Tgi and the modulus G* at 60°C Mb of the material constituting the contact element is higher than the modulus G* at 60°C Mi of the material constituting the inner covering layer, and the modulus G* at 60°C Mo of the material constituting the outer covering layer is higher than the modulus G* at 60°C Mb of the material constituting the contact element and/or the glass transition temperature Tgb of the material constituting the contact element is higher than the glass transition temperature Tgi of the material constituting the inner covering layer, and the glass transition temperature Tgo of the material constituting the outer covering layer is higher than the glass transition temperature Tgb of the material constituting the contact element.

This arrangement provides an improvement of performance on non-wintry surface at wide range of temperature while maintaining or even still improving performance on wintry surface.

Since at least one of the contact element is provided with the covering layer covering at least one of the lateral face of the contact element facing to circumferential orientation at least partly, the covering layer generates a good edge effect especially on wintry surface. Therefore it is possible to improve performance on wintry surface.

Since the covering layer consists of at least two layers, the outer covering layer facing to outward of the contact element, the material constituting the outer covering layer has the modulus G* at 60°C Mo and the glass transition temperature Tgo, and the inner covering layer facing to inward of the contact element, the material constituting the inner covering layer has the modulus G* at 60°C Mi and the glass transition temperature Tgi, the covering layer can adapt wide range of temperature in particular on non-wintry surface by combining different modulus G* and different glass transition temperature. Therefore it is possible to improve performance on non-wintry surface at wide range of temperature.

Since the modulus G* at 60°C Mb of the material constituting the contact element is higher than the modulus G* at 60°C Mi of the material constituting the inner covering layer, and the modulus G* at 60°C Mo of the material constituting the outer covering layer is higher than the modulus G* at 60°C Mb of the material constituting the contact element and/or the glass transition temperature Tgb of the material constituting the contact element is higher than the glass transition temperature Tgi of the material constituting the inner covering layer, and the glass transition temperature Tgo of the material constituting the outer covering layer is higher than the glass transition temperature Tgb of the material constituting the contact element, as the modulus G* at 60°C Mo of the material constituting the outer covering layer higher than the modulus G* at 60°C Mb of the material constituting the contact element enables to generate efficiently the edge effect especially on wintry surface and on non-wintry surface with relatively lower temperature, and the modulus G* at 60°C Mb of the material constituting the contact element higher than the modulus G* at 60°C Mi of the material constituting the inner covering layer supports to generate higher mu via the outer covering layer by generating a bending at the inner covering layer especially on non-wintry surface with relatively higher temperature thanks to the inner covering layer's relatively lower modulus G* at 60°C and/or as glass transition temperature Tgb of the material constituting the contact element higher than the glass transition temperature Tgi of the material constituting the inner covering layer supports to generate higher mu via the outer covering layer by generating a bending at the inner covering layer especially on non-wintry surface with relatively higher temperature thanks to the inner covering layer's relatively higher glass transition temperature, and the glass transition temperature Tgo of the material constituting the outer covering layer higher than the glass transition temperature Tgb of the material constituting the contact element enables to generate efficiently the edge effect especially on wintry surface and on non-wintry surface with relatively lower temperature. Therefore it is possible to improve performance on non-wintry surface at wide range of temperature while maintaining or even still improving performance on wintry surface.

In another preferred embodiment, a thickness of the covering layer measured on a plane parallel to the contact face in an orientation perpendicular to an extending orientation of the principal groove or the sub groove in which the covering layer is facing is at most equal to 2.0 mm.

If the thickness of the covering layer is more than 2.0 mm, there is a risk that a distribution of contact pressure in the contact face of the contact element becomes inappropriate leading degradation of performance on wintry surface especially on ice surface. By setting this thickness of the covering layer at most equal to 2.0 mm, it is possible to improve performance on non-wintry surface at wide range of temperature while maintaining or even still improving performance on wintry surface.

This thickness of the covering layer measured on the plane parallel to the contact face in the orientation perpendicular to the extending orientation of the principal groove or the sub groove in which the covering layer is facing is preferably at most equal to 1.5 mm, more preferably at most equal to 1.0 mm.

In another preferred embodiment, a thickness of the inner covering layer measured on a plane parallel to the contact face in an orientation perpendicular to an extending orientation of the principal groove or the sub groove in which the covering layer is facing is thicker than a thickness of the outer covering layer measured on the same plane.

According to this arrangement, as the inner covering layer increases its capability to generate higher mu via the outer covering layer by generating a bending at the inner covering layer especially on non-wintry surface with relatively higher temperature, it is possible to improve performance on non-wintry surface at further wide range of temperature while maintaining or even still improving performance on wintry surface.

In another preferred embodiment, a thickness of the inner covering layer measured on a plane parallel to the contact face in an orientation perpendicular to an extending orientation of the principal groove or the sub groove in which the covering layer is facing is thinner than a thickness of the outer covering layer measured on the same plane.

According to this arrangement, as the outer covering layer generates more certainly the edge effect especially on wintry surface by increasing scraping power and contact surface, it is further possible to improve performance on wintry surface.

In another preferred embodiment, a width of the covering layer is at least equal to 35% of a width of the contact element.

If this width of the covering layer is less than 35% of the width of the contact element, there is a risk that both the generation of higher mu via the outer covering layer on non-wintry surface and of the edge effect on wintry surface and on non-wintry surface due to insufficient volume of the covering layer to function. By setting the width of the covering layer at least equal to 35% of the width of the contact element, it is possible to improve performance on non-wintry surface at wide range of temperature while maintaining or even still improving performance on wintry surface.

This width of the covering layer is preferably at least equal to 50% of the width of the contact element, more preferably at least equal to 60% of the width of the contact element and still more preferably at least equal to 80% of the width of the contact element.

[Advantageous Effects of Invention]

According to the arrangements described above, it is possible to provide a tread for a tire which provides improvement of performance on non-wintry surface at wide range of temperature while maintaining or even still improving performance on wintry surface.

[Brief Description of Drawings]

Other characteristics and advantages of the invention arise from the description made hereafter in reference to the annexed drawings which show, as nonrestrictive examples, the embodiment of the invention.

In these drawings:

[Fig. 1]

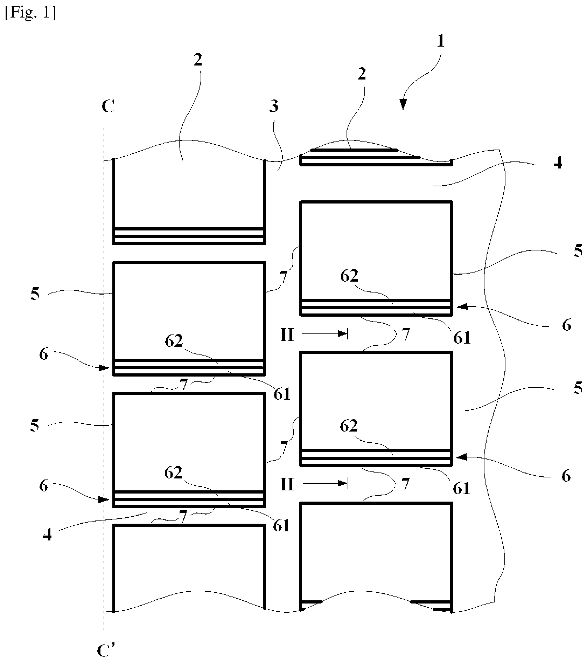

Fig. 1 is a schematic plan view of a tread according to a first embodiment of the present invention;
[Fig. 2]

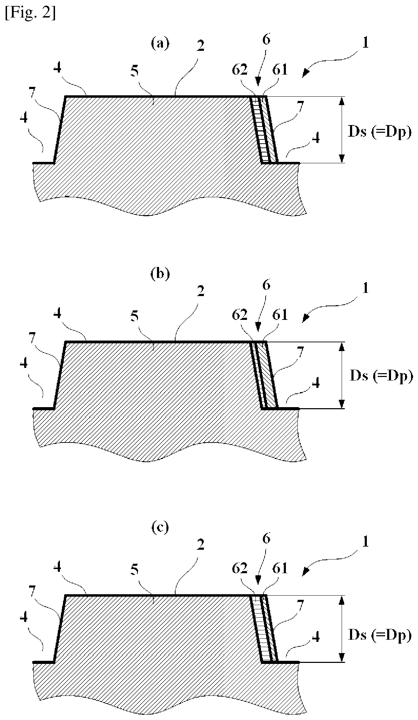

Fig. 2 is a schematic cross sectional view taken along line II-II in Fig. 1 in different variations (a), (b) and (c);
[Fig. 3]

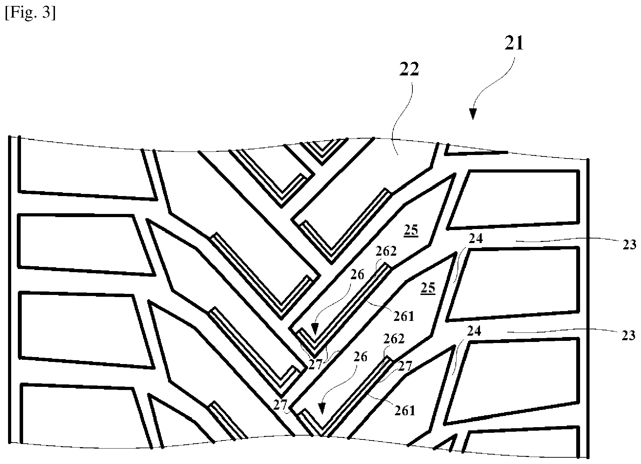

Fig. 3 is a schematic plan view of a tread according to a second embodiment of the present invention;

[Description of Embodiments]

Preferred embodiments of the present invention will be described below referring to the drawings.

A tread 1 for a tire according to a first embodiment of the present invention will be described referring to Figs. 1 and 2. Fig. 1 is a schematic plan view of a tread according to a first embodiment of the present invention. Fig. 2 is a schematic cross sectional view taken along line II-II in Fig. 1 in different variations (a), (b) and (c).

The tread 1 is a tread for a tire having dimension 225/45R17 and comprises a contact face 2 intended to come into contact with the ground during rolling, and at least one principal groove 3 of a depth Dp (shown in Fig. 2) and a plurality of sub grooves 4 of a depth Ds (shown in Fig. 2) extending in an orientation with an angle relative to an orientation the at least one principal groove 3 being extending. The tread 1 comprising a plurality of contact elements 5 delimited by the at least one principal groove 3 and the plurality of sub grooves 4. A material constituting the plurality of contact elements 5 have a modulus $G^*$ at 60°C Mb and a glass transition temperature Tgb. In this first embodiment, the tread 1 comprises at least two principal grooves 3 extending in circumferential orientation that is top-bottom orientation in Fig. 1 parallel to a center line indicated as line C-C', and the plurality of sub grooves 4 are extending in axial orientation perpendicular to the circumferential orientation.

As shown in Fig. 1, the at least one of a contact element 5 among the plurality of contact elements 5 is provided with a covering layer 6 covering at least one of a lateral face 7 of the contact element 5 facing to circumferential orientation at least partly. In this first embodiment, the covering layer 6 covers a full width of the contact element 5.

As shown in Figs. 1 and 2, the covering layer 6 consists of at least two layers, an outer covering layer 61 facing to outward of the contact element 5 and an inner covering layer 62 facing to inward of the contact element 5. A material constituting the outer covering layer 61 has a modulus $G^*$ at 60°C Mo and a glass transition temperature Tgo, a material constituting the inner covering layer 62 has a modulus $G^*$ at 60°C Mi and a glass transition temperature Tgi.

The contact element 5, the outer covering layer 61 and the inner covering layer 62 are configured as to have the modulus $G^*$ at 60°C Mb of the material constituting the contact element 5 is higher than the modulus $G^*$ at 60°C Mi of the material constituting the inner covering layer 62, and the modulus $G^*$ at 60°C Mo of the material constituting the outer covering layer 61 is higher than the modulus $G^*$ at 60°C Mb of the material constituting the contact element 5.

The contact element 5, the outer covering layer 61 and the inner covering layer 62 are also configured as to have the glass transition temperature Tgb of the material constituting the contact element 5 is higher than the glass transition temperature Tgi of the material constituting the inner covering layer 62, and the glass transition temperature Tgo of the material constituting the outer covering layer 61 is higher than the glass transition temperature Tgb of the material constituting the contact element 5.

As shown in Figs. 1 and 2, a thickness of the covering layer 6 measured on a plane parallel to the contact face 2 in an orientation perpendicular to an extending orientation of the principal groove 3 or the sub groove 4 in which the covering layer 6 is facing is at most equal to 2.0 mm.

As shown in Figs 1 and 2 (a), a thickness of the inner covering layer 62 measured on a plane parallel to the contact face 2 in an orientation perpendicular to an extending orientation of the principal groove 3 or the sub groove 4 in which the covering layer 6 is facing is equal to a thickness of the outer covering layer 61 measured on the same plane. As a variant, a thickness of the inner covering layer 62 measured on a plane parallel to the contact face 2 in an orientation perpendicular to an extending orientation of the principal groove 3 or the sub groove 4 in which the covering layer 6 is facing can be thinner than a thickness of the outer covering layer 61 measured on the same plane as shown in Fig 2 (b), or a thickness of the inner covering layer 62 measured on a plane parallel to the contact face 2 in an orientation perpendicular to an extending orientation of the principal groove 3 or the sub groove 4 in which the covering layer 6 is facing can be thicker than a thickness of the outer covering layer 61 measured on the same plane as shown in Fig 2 (c).

Since at least one of the contact element 5 is provided with the covering layer 6 covering at least one of the lateral face 7 of the contact element 5 facing to circumferential orientation at least partly, the covering layer 6 generates a good edge effect especially on wintry surface. Therefore it is possible to improve performance on wintry surface.

Since the covering layer 6 consists of at least two layers, the outer covering layer 61 facing to outward of the contact element 5, the material constituting the outer covering layer 61 has the modulus G* at 60°C Mo and the glass transition temperature Tgo, and the inner covering layer 62 facing to inward of the contact element 5, the material constituting the inner covering layer 62 has the modulus G* at 60°C Mi and the glass transition temperature Tgi, the covering layer 6 can adapt wide range of temperature in particular on non-wintry surface by combining different modulus G* and different glass transition temperature. Therefore it is possible to improve performance on non-wintry surface at wide range of temperature.

Since the modulus G* at 60°C Mb of the material constituting the contact element 5 is higher than the modulus G* at 60°C Mi of the material constituting the inner covering layer 62, and the modulus G* at 60°C Mo of the material constituting the outer covering layer 61 is higher than the modulus G* at 60°C Mb of the material constituting the contact element 5, it is possible to improve performance on non-wintry surface at wide range of temperature while maintaining or even still improving performance on wintry surface as the modulus G* at 60°C Mo of the material constituting the outer covering layer 61 higher than the modulus G* at 60°C Mb of the material constituting the contact element 5 enables to generate efficiently the edge effect especially on wintry surface and on non-wintry surface with relatively lower temperature, and the modulus G* at 60°C Mb of the material constituting the contact element 5 higher than the modulus G* at 60°C Mi of the material constituting the inner covering layer 62 supports to generate higher mu via the outer covering layer 61 by generating a bending at the inner covering layer 62 especially on non-wintry surface with relatively higher temperature thanks to the inner covering layer's relatively lower modulus G* at 60°C.

Since the glass transition temperature Tgb of the material constituting the contact element 5 is higher than the glass transition temperature Tgi of the material constituting the inner covering layer 62, and the glass transition temperature Tgo of the material constituting the outer covering layer 61 is higher than the glass transition temperature Tgb of the material constituting the contact element 5, it is possible to improve performance on non-wintry surface at wide range of temperature while maintaining or even still improving performance on wintry surface as the glass transition temperature Tgb of the material constituting the contact element 5 higher than the glass transition temperature Tgi of the material constituting the inner covering layer 62 supports to generate higher mu via the outer covering layer 61 by generating a bending at the inner covering layer 62 especially on non-wintry surface with relatively higher temperature thanks to the inner covering layer's relatively higher glass transition temperature, and the glass transition temperature Tgo of the material constituting the outer covering layer 61 higher than the glass transition temperature Tgb of the material constituting the contact element 5 enables to generate efficiently the edge effect especially on wintry surface and on non-wintry surface with relatively lower temperature.

Since the thickness of the covering layer 6 measured on a plane parallel to the contact face 2 in an orientation perpendicular to an extending orientation of the principal groove 3 or the sub groove 4 in which the covering layer 6 is facing is at most equal to 2.0 mm, it is possible to improve performance on non-wintry surface at wide range of temperature while maintaining or even still improving performance on wintry surface.

If the thickness of the covering layer 6 is more than 2.0 mm, there is a risk that a distribution of contact pressure in the contact face 2 of the contact element 5 becomes inappropriate leading degradation of performance on wintry surface especially on ice surface.

This thickness of the covering layer 6 measured on the plane parallel to the contact face 2 in the orientation perpendicular to the extending orientation of the principal groove 3 or the sub groove 4 in which the covering layer 6 is facing is preferably at most equal to 1.5 mm, more preferably at most equal to 1.0 mm.

When designing the thickness of the inner covering layer 62 measured on a plane parallel to the contact face 2 in an orientation perpendicular to an extending orientation of the principal groove 3 or the sub groove 4 in which the covering layer 6 is facing thicker than a thickness of the outer covering layer 61 measured on the same plane, it is possible to improve performance on non-wintry surface at further wide range of temperature while maintaining or even still improving performance on wintry surface as the inner covering layer 62 increases its capability to generate higher mu via the outer covering layer 61 by generating a bending at the inner covering layer 62 especially on non-wintry surface with relatively higher temperature.

When designing the thickness of the inner covering layer 62 measured on a plane parallel to the contact face 2 in an orientation perpendicular to an extending orientation of the principal groove 3 or the sub groove 4 in which the covering layer 6 is facing thinner than a thickness of the outer covering layer 61 measured on the same plane, it is further possible to improve performance on wintry surface as the outer covering layer 61 generates more certainly the edge effect especially on wintry surface by increasing scraping power and contact surface.

The depth Dp of the principal groove 3 and the depth Ds of the sub groove 4 may be the same as in this first embodiment, or may be different.

The covering layer 6 may be provided as to cover other lateral faces 7 including those not facing to circumferential orientation.

The thickness of whole the covering layer 6, the outer covering layer 61 or the inner covering layer 62 may vary in radial and/or axial orientation.

In radial orientation, the outer covering layer 61 and the inner covering layer 62 may have different length. Preferably whole the covering layer 6, the outer covering layer 61 or the inner covering layer 62 may be available until a level equivalent to a mean to indicate legal wear limit of the tread 1.

A tread 21 according to a second embodiment of the present invention will be described referring to Fig. 3. Fig. 3 is schematic plan view of a tread according to a second embodiment of the present invention. The construction of this second embodiment is similar to that of the first embodiment other than the arrangement shown in Fig. 3, thus description will be made referring to Fig. 3.

As shown in Fig. 3, the tread 21 comprises a contact face 22 intended to come into contact with the ground during rolling, and at least one principal groove 23 of a depth D (not shown) extending in oblique to axial orientation from center to shoulder, and a plurality of sub grooves 24 of a depth Ds (not shown) extending in an orientation with an angle relative to an orientation the at least one principal groove 23 is extending. The at least one principal groove 23 and the plurality of sub grooves 24 delimiting a plurality of contact elements 25. A material constituting the plurality of contact elements 25 have a modulus G* at 60°C Mb and a glass transition temperature Tgb.

As shown in Fig. 3, at least one of a contact element 25 among the plurality of contact elements 25 being provided with a covering layer 26 covering at least one of a lateral face 27 of the contact element 25 facing to circumferential orientation at least partly, the covering layer 26 consists of at least two layers, an outer covering layer 261 facing to outward of the contact element 25 and an inner covering layer 262 facing to inward of the contact element 25. A material constituting the outer covering layer 261 has a modulus G* at 60°C Mo and a glass transition temperature Tgo, a material constituting the inner covering layer 262 has a modulus G* at 60°C Mi and a glass transition temperature Tgi. In this second embodiment, the covering layer 26 covers two lateral faces 27 of the contact element 25 placed at a center region of the tread 21.

As shown in Fig. 3, a width of the covering layer 26 is at least equal to 35% of a width of the contact element 25.

Since the width of the covering layer 26 is at least equal to 35% of a width of the contact element 25, it is possible to improve performance on non-wintry surface at wide range of temperature while maintaining or even still improving performance on wintry surface.

If this width of the covering layer 26 is less than 35% of the width of the contact element 25, there is a risk that both the generation of higher mu via the outer covering layer 261 on non-wintry surface and of the edge effect on wintry surface and on non-wintry surface due to insufficient volume of the covering layer 26 to function.

This width of the covering layer 26 is preferably at least equal to 50% of the width of the contact element 25, more preferably at least equal to 60% of the width of the contact element 25 and still more preferably at least equal to 80% of the width of the contact element 25.

Even multiple side faces 27 are facing to circumferential orientation, the covering layer 26 may be provided to only one of multiple side faces 27.

The invention is not limited to the examples described and represented and various modifications can be made there without leaving its scope as defined by the claims.

[Examples]

In order to confirm the effect of the present invention, two types of tires of Examples to which the present invention is applied and other types of tires of Reference and Comparative Example were prepared.

The Examples were tires having the tread as described in the above the first embodiment with the contact elements provided with an incision opening to the contact face and extending fully in axial orientation. The covering layer was consisting of the outer covering layer and the inner covering layer. The Example 1 had been configured as to have the glass transition temperature Tgb of the material constituting the contact element higher than the glass transition temperature Tgi of the material constituting the inner covering layer (indicated as "=" for Tgb and "-" for Tgi), and the glass transition temperature Tgo of the material constituting the outer covering layer higher than the glass transition temperature Tgb of the material constituting the contact element (indicated as "=" for Tgb and "+" for Tgo). The Example 2 had been configured as to have the modulus G* at 60°C Mb of the material constituting the contact element higher than the modulus G* at 60°C Mi of the material constituting the inner covering layer (indicated as "=" for Mb and "-" for Mi), and the modulus G* at 60°C Mo of the material constituting the outer covering layer higher than the modulus G* at 60°C Mb of the material constituting the contact element (indicated as "=" for Mb and "+" for Mo). The Comparative Example was equivalent to the Example 2 but had been configured as to have the modulus G* at 60°C Mb of the material constituting the contact element higher than the modulus G* at 60°C Mi of the material constituting the inner covering layer (indicated as "=" for Mb and "-" for Mi), and the modulus G* at 60°C Mo of the material constituting the outer covering layer lower than the modulus G* at 60°C Mb of the material constituting the contact element (indicated as "=" for Mb and "--" for Mo). The Reference was a tire provided with one single covering layer. Internal construction of all the Examples, Comparative Example and the Reference was the same typical radial tire construction other than described above.

Wintry performance test:

- snow braking:

Brand-new test tires were mounted onto all four wheel of a 2,000 cc front-wheel drive vehicle. On a straight path compacted snow surface, braking with ABS (Anti-lock Braking System) was applied at a speed of 50 km/h, distance until 5 km/h was measured.
The results are shown in tables 1 and 2. In these tables 1 and 2, results are represented by an index of 100 for Reference, higher the number indicates better the performance.

Non-wintry performance test:

- wet braking:

Brand-new test tires were mounted onto all four wheel of a 2,000 cc front-wheel drive vehicle. On a straight path 1mm deep wet surface, braking with ABS (Anti-lock Braking System) was applied at a speed of 100 km/h, distance until 10 km/h was measured.
The results are also shown in tables 1 and 2. In these tables 1 and 2, results are represented by an index of 100 for Reference, higher the number indicates better the performance.

[Table 1]

|  | Example 1 | Comparative Example | Reference |
|---|---|---|---|
| modulus G* at 60°C Mb | = | = | = |
| modulus G* at 60°C Mi | - | - | = |
| modulus G* at 60°C Mo | + | -- | + |
| Snow braking (index) | 103 |  | 100 |
| Wet braking at 8°C (index) | 108 | 97 | 100 |
| Wet braking at 15°C (index) | 106 | 96 | 100 |

[Table 2]

|  | Example 2 | Reference |
|---|---|---|
| Glass transition temperature Tgb | = | = |
| Glass transition temperature Tgi | - | = |

(continued)

|  | Example 2 | Reference |
|---|---|---|
| Glass transition temperature Tgo | + | + |
| Snow braking (index) | 100 | 100 |
| Wet braking at 8°C (index) | 104 | 1 00 |
| Wet braking at 15°C (index) | 103 | 100 |

As seen from tables 1 and 2, the Examples show improvement of performance on non-wintry surface at wide range of temperature while maintaining or even still improving performance on wintry surface, which cannot be achieved by treads disclosed in prior arts.

[Reference Signs List]

1, 21      tread
2, 22      contact face
3, 23      principal groove
4, 24      sub groove
5, 25      contact element
6, 26      covering layer
61, 261    outer covering layer
62, 262    inner covering layer
7, 27      lateral face

## Claims

1. A tread (1) for a tire having a contact face (2) intended to come into contact with ground during rolling, the tread (1) being provided with at least one principal groove (3) of a depth Dp, and a plurality of sub grooves (4) of a depth Ds extending in an orientation with an angle relative to an orientation the at least one principal groove (3) being extending, the at least one principal groove (3) and the plurality of sub grooves (4) delimiting a plurality of contact elements (5), a material constituting the plurality of contact elements (5) having a modulus G* at 60°C Mb and a glass transition temperature Tgb,

   at least one of a contact element (5) among the plurality of contact elements (5) being provided with a covering layer (6) covering at least one of a lateral face (7) of the contact element (5) facing to circumferential orientation at least partly,
   the covering layer (6) consisting of at least two layers, an outer covering layer (61) facing to outward of the contact element (5), a material constituting the outer covering layer (61) has a modulus G* at 60°C Mo and a glass transition temperature Tgo, and an inner covering layer (62) facing to inward of the contact element (5), a material constituting the inner covering layer (62) has a modulus G* at 60°C Mi and a glass transition temperature Tgi, the tread being **characterized in that** the modulus G* at 60°C Mb of the material constituting the contact element (5) is higher than the modulus G* at 60°C Mi of the material constituting the inner covering layer (62), and **wherein** the modulus G* at 60°C Mo of the material constituting the outer covering layer (61) is higher than the modulus G* at 60°C Mb of the material constituting the contact element (5) and/or the glass transition temperature Tgb of the material constituting the contact element (5) is higher than the glass transition temperature Tgi of the material constituting the inner covering layer (62), and **wherein** the glass transition temperature Tgo of the material constituting the outer covering layer (61) is higher than the glass transition temperature Tgb of the material constituting the contact element (5), the modulus G* Mb, Mo and Mi being measured according to ASTM D 5992-96 standard by subjecting the material to a simple alternating sinusoidal shear load at a frequency of 10 Hz under a maximum shear stress imposed of 0.7 MPa.

2. The tread (1) according to Claim 1, **wherein** a thickness of the covering layer (6) measured on a plane parallel to the contact face (2) in an orientation perpendicular to an extending orientation of the principal groove (3) or the sub groove (4) in which the covering layer (6) is facing is at most equal to 2.0 mm.

3. The tread (1) according to Claim 1 or Claim 2, **wherein** a thickness of the inner covering layer (62) measured on a plane parallel to the contact face (2) in an orientation perpendicular to an extending orientation of the principal groove (3) or the sub groove (4) in which the covering layer (6) is facing is thicker than a thickness of the outer covering layer (61) measured on the same plane.

4. The tread (1) according to Claim 1 or Claim 2, **wherein** a thickness of the inner covering layer (62) measured on a plane parallel to the contact face (2) in an orientation perpendicular to an extending orientation of the principal groove (3) or the sub groove (4) in which the covering layer (6) is facing is thinner than a thickness of the outer covering layer (61) measured on the same plane.

5. The tread (1) according to any one of the Claims 1 to 4, **wherein** a width of the covering layer (6) is at least equal to 35% of a width of the contact element (5).

6. A tire having a tread according to any one of the Claims 1 to 5.

**Patentansprüche**

1. Lauffläche (1) für einen Reifen mit einer Kontaktfläche (2), die dazu bestimmt ist, während des Abrollens mit dem Boden in Kontakt zu kommen, wobei die Lauffläche (1) mit mindestens einer Hauptrille (3) mit einer Tiefe Dp und einer Vielzahl von Nebenrillen (4) mit einer Tiefe Ds versehen ist, die sich in einer Ausrichtung mit einem Winkel relativ zu einer Ausrichtung erstrecken, in der sich die mindestens eine Hauptrille (3) erstreckt, wobei die mindestens eine Hauptrille (3) und die Vielzahl von Nebenrillen (4) eine Vielzahl von Kontaktelementen (5) begrenzen, wobei ein Material, das die Vielzahl von Kontaktelementen (5) bildet, einen Modul G* bei 60°C Mb und eine Glasübergangstemperatur Tgb aufweist,

wobei mindestens eines der Kontaktelemente (5) aus der Vielzahl von Kontaktelementen (5) mit einer Deckschicht (6) versehen ist, die mindestens eine der Seitenflächen (7) des Kontaktelements (5), die der Umfangsrichtung zugewandt sind, mindestens teilweise bedeckt,
wobei die Deckschicht (6) aus mindestens zwei Schichten besteht, einer äußeren Deckschicht (61), die von dem Kontaktelement (5) nach außen weist, wobei ein die äußere Deckschicht (61) bildendes Material einen Modul G* bei 60°C Mo und eine Glasübergangstemperatur Tgo aufweist, und einer inneren Deckschicht (62), die von dem Kontaktelement (5) nach innen weist, ein die innere Deckschicht (62) bildendes Material einen Modul G* bei 60°C Mi und eine Glasübergangstemperatur Tgi aufweist, wobei die Lauffläche **dadurch gekennzeichnet ist, dass** der Modul G* bei 60°C Mb des das Kontaktelement (5) bildenden Materials höher als der Modul G* bei 60°C Mi des die innere Deckschicht (62) bildenden Materials ist, und wobei der Modul G* bei 60°C Mo des die äußere Deckschicht (61) bildenden Materials höher als der Modul G* bei 60°C Mb des das Kontaktelement (5) bildenden Materials ist und/oder die Glasübergangstemperatur Tgb des das Kontaktelement (5) bildenden Materials höher als die Glasübergangstemperatur Tgi des das die innere Deckschicht (62) bildenden Materials ist, und wobei die Glasübergangstemperatur Tgo des das die äußere Deckschicht (61) bildenden Materials höher als die Glasübergangstemperatur Tgb des das Kontaktelement (5) bildenden Materials ist, wobei der Modul G* Mb, Mo und Mi gemäß der Norm ASTM D 5992-96 gemessen wird, indem das Material einer einfachen alternierenden sinusförmigen Scherbelastung mit einer Frequenz von 10 Hz unter einer maximalen Scherspannung von 0,7 MPa unterworfen wird.

2. Lauffläche (1) nach Anspruch 1, wobei die Dicke der Deckschicht (6), gemessen auf einer Ebene parallel zur Kontaktfläche (2) in einer Ausrichtung rechtwinklig zu einer Erstreckungsausrichtung der Hauptrille (3) oder der Nebenrille (4), in die die Deckschicht (6) weist, höchstens gleich 2,0 mm ist.

3. Lauffläche (1) nach Anspruch 1 oder Anspruch 2, wobei eine Dicke der inneren Deckschicht (62), gemessen auf einer Ebene parallel zur Kontaktfläche (2) in einer Ausrichtung rechtwinklig zu einer sich erstreckenden Ausrichtung der Hauptrille (3) oder der Nebenrille (4), in die die Deckschicht (6) weist, dicker als eine Dicke der äußeren Deckschicht (61), gemessen auf der gleichen Ebene, ist.

4. Lauffläche (1) nach Anspruch 1 oder Anspruch 2, wobei eine Dicke der inneren Deckschicht (62), gemessen auf einer Ebene parallel zur Kontaktfläche (2) in einer Ausrichtung rechtwinklig zu einer sich erstreckenden Ausrichtung der Hauptrille (3) oder der Nebenrille (4), in die die Deckschicht (6) weist, dünner als eine Dicke der äußeren Deckschicht (61), gemessen auf der gleichen Ebene, ist.

**5.** Lauffläche (1) nach einem der Ansprüche 1 bis 4, wobei die Breite der Deckschicht (6) mindestens 35 % der Breite des Kontaktelements (5) beträgt.

**6.** Reifen, umfassend eine Lauffläche nach einem der Ansprüche 1 bis 5.

**Revendications**

**1.** Bande de roulement (1) pour un pneu ayant une face de contact (2) prévue pour entrer en contact avec le sol durant le roulement, la bande de roulement (1) étant pourvue d'au moins une rainure principale (3) d'une profondeur Dp, et d'une pluralité de rainures subsidiaires (4) d'une profondeur Ds s'étendant dans une orientation avec un angle relativement à une orientation dans laquelle l'au moins une rainure principale (3) s'étend, l'au moins une rainure principale (3) et la pluralité de rainures subsidiaires (4) délimitant une pluralité d'éléments de contact (5), un matériau constituant la pluralité d'éléments de contact (5) ayant un module G* à 60 °C Mb et une température de transition vitreuse Tgb,

au moins un d'un élément de contact (5) parmi la pluralité d'éléments de contact (5) étant pourvu d'une couche de couverture (6) couvrant au moins une d'une face latérale (7) de l'élément de contact (5) faisant face à une orientation circonférentielle au moins partiellement,
la couche de couverture (6) étant constituée d'au moins deux couches, une couche de couverture extérieure (61) faisant face à l'extérieur de l'élément de contact (5), un matériau constituant la couche de couverture extérieure (61) a un module G* à 60 °C Mo et une température de transition vitreuse Tgo, et une couche de couverture (62) faisant face à l'intérieur de l'élément de contact (5), un matériau constituant la couche de couverture (62) a un module G* à 60 °C Mi et une température de transition vitreuse Tgi, la bande de roulement étant **caractérisée en ce que** le module G* à 60 °C Mb du matériau constituant l'élément de contact (5) est plus élevé que le module G* à 60 °C Mi du matériau constituant la couche de couverture (62), et dans laquelle le module G* à 60 °C Mo du matériau constituant la couche de couverture extérieure (61) est plus élevé que le module G* à 60 °C Mb du matériau constituant l'élément de contact (5) et/ou la température de transition vitreuse Tgb du matériau constituant l'élément de contact (5) est plus élevée que la température de transition vitreuse Tgi du matériau constituant la couche de couverture (62), et dans laquelle la température de transition vitreuse Tgo du matériau constituant la couche de couverture extérieure (61) est plus élevée que la température de transition vitreuse Tgb du matériau constituant l'élément de contact (5), le module G* Mb, Mo et Mi étant mesurés selon la norme ASTM D 5992-96 en soumettant le matériau à une charge de cisaillement sinusoïdale alternée simple à une fréquence de 10 Hz sous une contrainte de cisaillement maximum imposée de 0,7 MPa.

**2.** Bande de roulement (1) selon la revendication 1, dans laquelle une épaisseur de la couche de couverture (6) mesurée sur un plan parallèle à la face de contact (2) dans une orientation perpendiculaire à une orientation d'extension de la rainure principale (3) ou de la rainure subsidiaire (4) dans laquelle la couche de couverture (6) fait face est au plus égale à 2,0 mm.

**3.** Bande de roulement (1) selon la revendication 1 ou la revendication 2, dans laquelle une épaisseur de la couche de couverture (62) mesurée sur un plan parallèle à la face de contact (2) dans une orientation perpendiculaire à une orientation d'extension de la rainure principale (3) ou de la rainure subsidiaire (4) dans laquelle la couche de couverture (6) fait face est plus épaisse qu'une épaisseur de la couche de couverture extérieure (61) mesurée sur le même plan.

**4.** Bande de roulement (1) selon la revendication 1 ou la revendication 2, dans laquelle une épaisseur de la couche de couverture (62) mesurée sur un plan parallèle à la face de contact (2) dans une orientation perpendiculaire à une orientation d'extension de la rainure principale (3) ou de la rainure subsidiaire (4) dans laquelle la couche de couverture (6) fait face est plus mince qu'une épaisseur de la couche de couverture extérieure (61) mesurée sur le même plan.

**5.** Bande de roulement (1) selon l'une quelconque des revendications 1 à 4, dans laquelle une largeur de la couche de couverture (6) est au moins égale à 35 % d'une largeur de l'élément de contact (5).

**6.** Pneu, ayant une bande de roulement selon l'une quelconque des revendications 1 à 5.

[Fig. 1]

[Fig. 2]

[Fig. 3]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013088570 A
- JP 7047814 A
- JP 2010105509 A
- WO 2018221630 A1